(19) **Europäisches Patentamt European Patent Office Office européen des brevets**

(11) **EP 4 158 383 B1**

(12) **FASCICULE DE BREVET EUROPEEN**

(45) Date de publication et mention de la délivrance du brevet:
**01.04.2026 Bulletin 2026/14**

(21) Numéro de dépôt: **21734414.2**

(22) Date de dépôt: **28.05.2021**

(51) Classification Internationale des Brevets (IPC):
**G01S 19/09** *(2010.01)* **G01S 19/42** *(2010.01)*
**G01S 19/34** *(2010.01)*

(52) Classification Coopérative des Brevets (CPC):
**G01S 19/09; G01S 19/42;** G01S 19/34

(86) Numéro de dépôt international:
**PCT/FR2021/050974**

(87) Numéro de publication internationale:
**WO 2021/240119 (02.12.2021 Gazette 2021/48)**

(54) **MÉTHODE DE POSITIONNEMENT GNSS DÉPORTÉE DANS LE CLOUD**

CLOUD-OFFLOADED-GNSS-POSITIONIERUNGSVERFAHREN

CLOUD-OFFLOADED GNSS POSITIONING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.05.2020 FR 2005726**

(43) Date de publication de la demande:
**05.04.2023 Bulletin 2023/14**

(73) Titulaire: **Syntony**
**31300 Toulouse (FR)**

(72) Inventeurs:
• **CARRIE, Guillaume**
**31470 SAINT-LYS (FR)**

• **GERNOT, Cyrille**
**31470 SAINTE-FOY-DE-PEYROLIERES (FR)**
• **DAUBAS, Sylvain**
**82000 MONTAUBAN (FR)**

(74) Mandataire: **Santarelli**
**Tour Trinity**
**1 bis Place de la Défense**
**92400 Courbevoie (FR)**

(56) Documents cités:
**US-A1- 2007 139 264    US-A1- 2010 302 099**
**US-A1- 2015 061 934**

**Description**

**DOMAINE TECHNIQUE**

La présente invention concerne de manière générale le domaine du positionnement par satellites ou GNSS (*Géolocalisation et Navigation par Système de Satellites*) et plus particulièrement une méthode de positionnement GNSS déportée dans le Cloud. Elle trouve particulièrement application dans le domaine de l'Internet des Objets (IoT) pour le positionnement d'objets connectés.

**ÉTAT DE LA TECHNIQUE ANTÉRIEURE**

La position d'un objet connecté dans un réseau IoT peut être déterminée par différentes méthodes connues de l'état de la technique.

Certaines méthodes de positionnement font appel à des antennes du réseau IoT, à savoir, selon le cas, à des antennes propriétaires du fournisseur de service IoT (SigFox, LoRa) ou bien à des antennes de stations de base du réseau cellulaire (NB-IoT). La position de l'objet connecté est alors déterminée par triangulation à partir des distances de l'objet à une pluralité (au moins 3) d'antennes. La position obtenue est cependant peu précise car les distances sont estimées à partir mesures de puissance (RSSI) d'un signal émis par l'objet et reçu par les antennes en question, mesures qui peuvent être indisponibles (couverture insuffisante du réseau) ou entachées d'erreur (multi-trajet ou occultation, notamment en milieu urbain).

Alternativement, la position de l'objet peut être obtenue de manière conventionnelle en l'équipant d'un système de positionnement par satellites (GPS, Galileo, GLONASS), désigné dans la suite de manière générique par GNSS.

Toutefois, ces systèmes sont complexes et nécessitent d'importantes ressources calculatoires. En outre, l'intégration d'une puce GNSS au sein d'un objet connecté n'est généralement pas envisageable en raison de sa consommation élevée en énergie. Une activation épisodique du système de positionnement GNSS pour réduire sa consommation serait par ailleurs sous-optimale voire inopérante. En effet, un récepteur GNSS a généralement besoin de plusieurs minutes pour acquérir les données de navigation (données d'almanach et d'éphémérides) des différents satellites lorsqu'il effectue un démarrage à froid (c'est-à-dire sans aucune information *a priori)*. Le temps nécessaire pour obtenir la position de l'objet sans information *a priori* est désigné par TTFF (*Time To First Fix*). Lorsque le système GNNS a déjà effectué l'acquisition des satellites et dispose de leurs données d'almanach (démarrage tiède), le temps nécessaire à l'obtention de la position de l'objet peut être réduit à une quelques dizaines de secondes (30 s pour un système GPS). Enfin, lorsque le système GNSS dispose déjà des données d'éphémérides des satellites et d'une bonne estimation du temps des satellites (démarrage à chaud), le temps nécessaire à l'obtention de la position de l'objet peut être de l'ordre de quelques secondes.

Diverses solutions ont été proposées dans l'état de la technique pour répartir une partie du traitement effectué par un récepteur GNSS entre l'objet connecté et un serveur distant situé dans le Cloud. Ainsi, il est connu de réduire la partie du récepteur GNSS hébergée par l'objet connecté, à un simple étage de translation à une fréquence intermédiaire (IF) suivi d'un module d'échantillonnage. Des paquets d'échantillons ainsi obtenus (données brutes ou *raw data*) sont alors horodatés et transmis à un serveur distant qui effectue le reste du traitement. Autrement dit, le positionnement GNSS est déporté dans le Cloud.

Ces systèmes de positionnement GNSS distribués entre l'objet et le Cloud sont généralement dénommés dans la littérature « snapshot GNSS receivers » ou « Cloud-Offloaded GNSS receivers ».

On trouvera une description d'un tel récepteur distribué (CO-GPS) dans l'article de J. Liu et al. intitulé « Energy efficient GPS sensing with Cloud offloading » publié dans Proc. of 10th ACM Conference on Embedded Networked Sensor Systems (SenSys 2012) , Nov. 2012.

Cependant, la méthode de positionnement déportée dans le Cloud qui y est décrite requiert un horodatage des séquences brutes transmises par l'objet connecté, par exemple au moyen d'un signal d'horloge émis par une station de base WWVB, ce qui complexifie la partie du récepteur GNSS hébergée par l'objet. En outre, la levée d'ambigüité sur la position de l'objet requiert un calcul des décalages Doppler dus aux vitesses relatives de l'objet par rapport aux satellites, ce qui suppose que l'objet soit immobile par rapport à un référentiel terrestre.

L'objet de la présente invention est par conséquent de proposer une méthode de positionnement GNSS déportée dans le Cloud qui ne requiert pas d'horodatage par la partie du récepteur hébergée par l'objet et qui puisse s'appliquer indifféremment aux objets mobiles ou non.

**EXPOSÉ DE L'INVENTION**

La présente invention est définie, dans un premier mode de réalisation, par une méthode de positionnement d'un objet connecté, l'objet recevant des signaux GNSS d'une pluralité de satellites appartenant à au moins un système satellitaire et les translatant en fréquence intermédiaire avant de les échantillonner, dans laquelle :

(a) l'objet effectue à partir d'une séquence des échantillons ainsi obtenus une acquisition d'un ensemble S de satellites vus de l'objet connecté, puis estime des phases de code des signaux GNSS, les phases de code étant ensuite transmises à un serveur de calcul via un réseau de communication, ladite méthode étant spécifique en ce que :
(b) les phases de code sont horodatées au moyen d'une horloge d'horodatage par un nœud du réseau ;
(c) le serveur de calcul détermine parmi les points d'un réseau maillé dans une zone d'intérêt un ensemble de points candidats voyant les satellites de l'ensemble $S$ à l'instant d'horodatage ;
(d) le serveur calcule les pseudodistances séparant les points candidats et les satellites de $S$ pour une pluralité d'instants de transmission possibles et en déduit des différences de pseudodistances par rapport au dit satellite de référence ;
(e) le serveur estime des pseudodistances séparant l'objet connecté et les satellites de $S$ à partir des phases de code reçues, estimées à l'étape (a), et en déduit des différences de pseudodistances estimées par rapport au satellite de référence, puis calcule une fonction d'objectif dépendant de l'écart entre les différences de pseudodistances ainsi estimées et les pseudodistances calculées à l'étape (d), l'écart étant sommé sur l'ensemble des satellites de l'ensemble $S$ hormis le satellite de référence, le calcul étant réalisé pour chaque point candidat ;
(f) le point candidat optimisant la fonction d'objectif fournit une estimation de la position de l'objet connecté.

Avantageusement, les phases de code sont horodatées à l'étape (b) par une passerelle reliée au point d'accès du réseau recevant lesdites phases de code ou bien par le serveur de calcul.

L'invention est également définie, dans un second mode de réalisation, par une méthode de positionnement d'un objet connecté, l'objet recevant des signaux GNSS d'une pluralité de satellites appartenant à au moins un système satellitaire et les translatant en fréquence intermédiaire avant de les échantillonner, au moins un paquet d'échantillons ainsi obtenus étant transmis à un serveur de calcul via un réseau de communication, ladite méthode étant spécifique en ce que :

(a) le paquet d'échantillons est horodaté au moyen d'une horloge d'horodatage par un nœud du réseau ;
(b) le serveur de calcul effectue, à partir dudit paquet, une acquisition d'un ensemble S de satellites vus de l'objet connecté, puis estime des phases de code des signaux GNSS et en déduit les différences de pseudodistances séparant l'objet connecté et lesdits satellites, les différences étant estimées par rapport à un satellite de référence de l'ensemble $S$ ;
(c) le serveur de calcul détermine parmi les points d'un réseau maillé dans une zone d'intérêt un ensemble de points candidats voyant les satellites de l'ensemble S à l'instant d'horodatage ;
(d) le serveur calcule les pseudodistances séparant les points candidats et les satellites de $S$ pour une pluralité d'instants de transmission possibles et en déduit des différences de pseudodistances par rapport au dit satellite de référence ;
(e) le serveur calcule une fonction d'objectif dépendant de l'écart entre les différences de pseudodistances estimées à l'étape (b) et les différences de pseudodistances calculées à l'étape (d), l'écart étant sommé sur l'ensemble des satellites de l'ensemble $S$ hormis le satellite de référence, le calcul étant réalisé pour chaque point candidat ;
(f) le point candidat optimisant la fonction d'objectif fournit une estimation de la position de l'objet connecté.

Avantageusement, le paquet d'échantillons est horodaté à l'étape (a) par une passerelle reliée au point d'accès du réseau recevant ledit paquet ou bien par le serveur de calcul.

L'horloge d'horodatage peut notamment être synchronisée par le protocole NTP.

Quel que soit le mode de réalisation, les différences entre pseudodistances calculées à l'étape (d) sont calculées modulo $cT$ où $c$ est la vitesse de la lumière et $T$ la période de répétition d'un code d'étalement dans les signaux GNSS.

A l'étape (c), les dimensions de la maille du réseau sont choisies de préférence strictement inférieures à $cT$.

A l'étape (c), le serveur peut déterminer les positions des satellites de l'ensemble S à l'instant d'horodatage à partir d'informations d'almanach ou d'éphémérides reçues par le réseau, et en déduit les points candidats de la zone d'intérêt voyant les satellites dudit ensemble.

Les instants de transmission possibles sont typiquement des instants de transmission de codes par les satellites de $S$ au sein d'un intervalle $[\hat{t}_E - \Delta t_E, \hat{t}_E + \Delta t_E]$ avec $\hat{t}_E = t_R - \theta$ où $\hat{t}_R$ est l'instant d'horodatage, $\theta$ est un temps moyen de propagation entre les satellites de $S$ et les points candidats, et $\Delta t_E$ est une marge d'erreur prédéterminée.

Cette marge d'erreur peut être choisie supérieure à l'offset maximal de l'horloge d'horodatage par rapport à l'horloge du système satellitaire.

Selon une variante avantageuse, à l'étape (e), le serveur détermine si un critère de qualité est satisfait en comparant une valeur extrémale de la fonction d'objectif avec une valeur de seuil prédéterminée et lorsque le critère de qualité n'est pas satisfait, une nouvelle séquence d'étapes (c), (d), (e) est effectuée en éliminant un satellite de l'ensemble *S*.

La fonction d'objectif pourra être une métrique de vraisemblance et le point candidat optimal pourra alors être défini par l'indice $i_{ML}$ du point candidat parmi l'ensemble des points candidats $P_i$ , $i = 0,.., N$ -1, donné par :

$$ i_{ML}, j_{ML} = \arg\max_{i,j} \left( \sum_{k=1}^{K-1} \frac{1}{c} \left| \left( \rho_{k,i}^{j} - \rho_{0,i}^{j} \right) \mathrm{mod}.T + \left( \tau_k - \tau_0 \right) \mathrm{mod}.T \right|^2 \right)^{-1} $$

où ( $\rho_{k,i}^{j} - \rho_{0,i}^{j}$ ) est la différence des pseudodistances séparant, à l'instant de transmission possible $t_E^j$ , le point candidat $P_i$ et le satellite $s_k$ de l'ensemble $S$, $T$ est la période de répétition d'un code d'étalement dans les signaux GNSS, ($\tau_k - \tau_0$) est la différence de phases du code du satellite $s_k$ et du satellite $s_0$ de référence, c est la vitesse de la lumière et $K$ est le nombre de satellites de l'ensemble $S$.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1A représente de manière schématique l'architecture d'un système CO-GNSS susceptible de mettre en œuvre la méthode de positionnement selon un premier mode de réalisation de l'invention ;
La Fig. 1B représente de manière schématique l'architecture d'un système CO-GNSS susceptible de mettre en œuvre la méthode de positionnement selon un second mode de réalisation de l'invention ;
La Fig. 2 représente de manière schématique l'organigramme d'une méthode de positionnement CO-GNSS selon le premier mode de réalisation de l'invention ;
La Fig. 3 représente de manière schématique l'organigramme d'une méthode de positionnement CO-GNSS selon le second mode de réalisation de l'invention ;
La Fig. 4 représente le résultat de l'étape de détermination des points candidats dans la méthode de la Fig. 2 ou 3.
La Fig. 5 représente le résultat de l'étape de sélection du point candidat selon un critère de maximum de vraisemblance dans la méthode de la Fig. 2 ou 3.

## EXPOSÉ DÉTAILLÉ DE MODES DE RÉALISATION PARTICULIERS

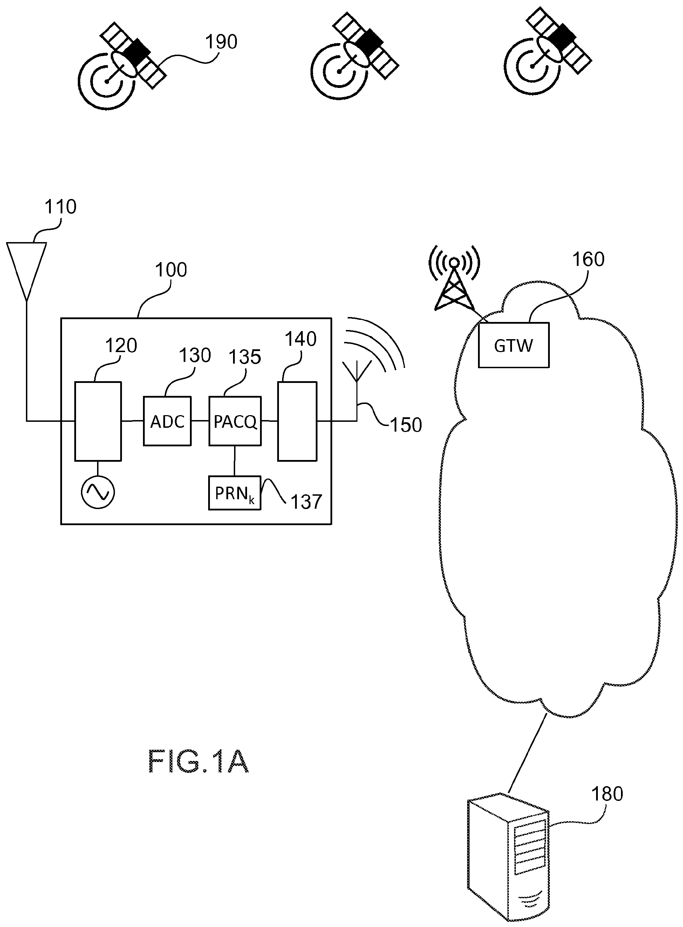

La Fig. 1A représente une architecture générique dans laquelle la méthode de positionnement CO-GNSSS selon un premier mode de réalisation de l'invention peut être mise en œuvre.

L'objet connecté 100 est équipé d'une première antenne RF, 110, capable de recevoir des signaux GNSS émis par des satellites 190, par exemple d'un ou de plusieurs systèmes satellitaires tels que GPS, Galileo, Glonass, Beidou, etc.

A titre d'illustration et sans perte de généralité, nous supposerons dans la suite, hors mention explicite, que les signaux GNSS sont des signaux émis par des satellites GPS.

On rappelle que les signaux GNSS L1 C/A des satellites GPS sont des signaux RF émis sur une porteuse de fréquence L1 (1575,42 MHz). Les satellites transmettent leurs signaux GNSS de manière simultanée et continue, chaque satellite transmettant, avec un débit de 50 bits/s des paquets de données fournissant notamment les paramètres d'orbite (données d'almanach et d'éphémérides) du satellite en question. Les signaux GNSS des différents satellites sont multiplexés par codes (CDMA), chaque satellite dispose de son propre code (ou séquence) d'étalement d'une longueur de 1023 bits (ou chips). Autrement dit, chaque bit émis par un satellite, $SV_k$, est modulé par la séquence d'étalement propre à ce dernier, $PRN_k$, celle-ci se répétant avec une période très inférieure (1/20) à la durée d'un bit.

Le signal RF reçu par l'antenne 110 est translaté à une fréquence intermédiaire (IF) par le mélangeur de fréquence 120 avant d'être échantillonné en 130 à une fréquence supérieure ou égale à la fréquence de Nyquist pour obtenir une séquence d'échantillons.

Une acquisition des différents satellites est réalisée en 135, les phases de code relatives aux différents satellites étant obtenues par corrélation glissante avec des répliques locales des codes respectifs de ces satellites stockées en 137. On note dans la suite S l'ensemble des satellites acquis.

Plus précisément, afin de tenir compte, d'une part, du décalage de fréquence Doppler dû à la vitesse relative de l'objet par rapport à chaque satellite et, d'autre part, du décalage de fréquence dû à la dérive de l'horloge locale, un paquet d'échantillons est d'abord soumis à une FFT et le signal dans chaque bande de fréquence (*frequency bin*), puis fait l'objet d'une multiplication avec la conjuguée de la FFT de la réplique locale, le résultat ainsi obtenu étant enfin soumis à une FFT inverse. Cette opération est équivalente à une corrélation glissante avec une réplique locale du code de chaque satellite de la constellation, décalée à la fréquence de la bande considérée.

Le module 135 effectue ainsi, à partir du paquet d'échantillons, l'acquisition de l'ensemble S des satellites vus par l'objet connecté. Il convient de noter que d'autres méthodes d'acquisition, connues en soi, pourront être utilisées sans sortir du périmètre de la présente invention.

Pour chacun des satellites $SV_k$, $k = 0,...,K-1$, de l'ensemble S, il détermine ainsi « la phase du code » présent dans le signal reçu, c'est-à-dire le début des codes correspondants dans la séquence d'échantillons, correspondant au maximum de la corrélation glissante précitée.

Les phases de code ainsi obtenues pour les différents satellites sont transmises par un module d'émission IoT (LoRa, SigFox, NB-5G), 140, via une seconde antenne 150 à un point d'accès (station de base, nœud propriétaire), équipé d'une passerelle 160 qui les route ensuite à travers le réseau Internet à destination d'un serveur de calcul, 180.

Avantageusement, la passerelle 160 dispose d'un module d'horodatage (non représenté) qui concatène un jeton d'horodatage (*timestamp*) aux phases de code lors de leur réception avant de les relayer au serveur. Le module d'horodatage pourra par exemple se synchroniser avec le réseau au moyen d'un protocole NTP (*Network Time Protocol*).

Alternativement, les phases de code pourront être horodatées par le serveur de calcul, autrement dit se voir attribuer un temps de réception, le serveur de calcul s'étant avantageusement synchronisé avec le réseau au moyen du protocole NTP.

Il est important de noter que l'objet connecté n'effectue pas lui-même l'horodatage. En effet, un tel horodatage supposerait de disposer d'une horloge locale présentant une faible dérive par rapport à l'horloge GPS, ce qui serait difficilement compatible avec la mise en veille de l'objet ou augmenterait sa consommation dans ce mode.

Les phases de code, horodatées par la passerelle ou par le serveur de calcul, sont ensuite traitées par ce dernier pour estimer la position de l'objet connecté, comme détaillé plus loin.

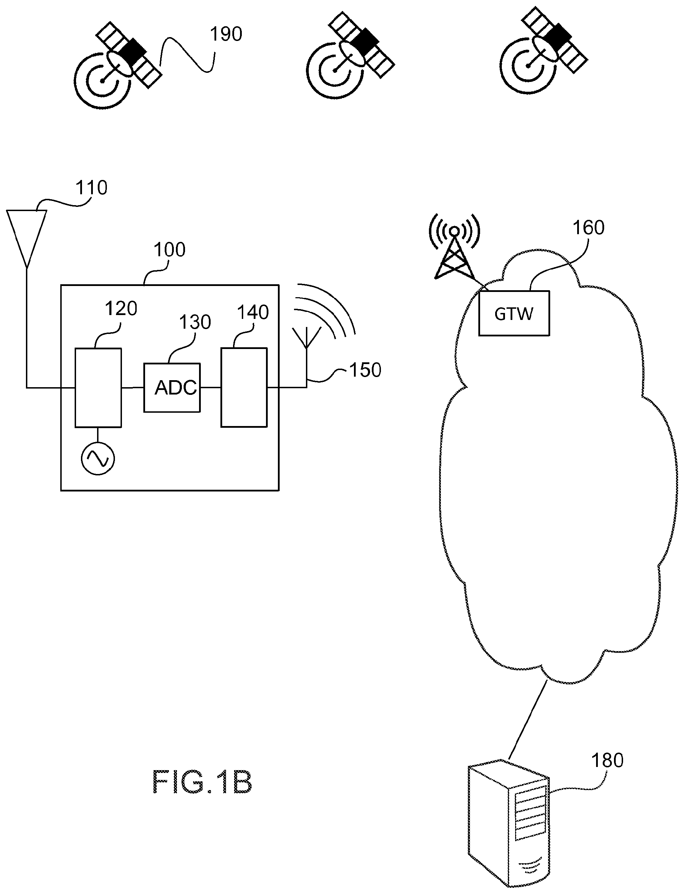

La Fig. 1B représente une architecture générique dans laquelle la méthode de positionnement CO-GNSSS selon un premier mode de réalisation de l'invention peut être mise en œuvre.

Les éléments portant les mêmes signes de référence que ceux de la Fig. 1A ont la même signification.

Comme dans le premier mode de réalisation, le signal RF reçu par l'antenne 110 est translaté à une fréquence intermédiaire par le mélangeur de fréquence 120 avant d'être échantillonné en 130 pour obtenir une séquence d'échantillons. Un paquet d'échantillons est stocké dans un buffer (non représenté) puis envoyé via le module d'émission IoT, 140, et la seconde antenne, 150, au point d'accès équipé de la passerelle 160 qui le route via Internet au serveur de calcul.

Le paquet d'échantillons reçus (*raw data*) est horodaté par la passerelle ou par le serveur de calcul, comme dans le premier mode de réalisation. Toutefois, à la différence du premier mode de réalisation, c'est le paquet d'échantillons lui-même et non les phases de code qui est ici transmis au serveur après avoir été horodaté, le serveur effectuant alors l'acquisition et l'estimation des phases de code.

Le premier mode de réalisation présente l'avantage de ne nécessiter que la transmission d'une information réduite (les phases de code), ce qui est particulièrement adapté à un réseau IoT dans la mesure où les liaisons montantes sont généralement à faible débit. En revanche, elle requiert une certaine complexité de traitement au niveau de l'objet connecté. A l'inverse, le second mode de réalisation se contente d'une architecture très simple de l'objet connecté mais suppose une transmission d'une quantité plus importante de données.

Le principe de la méthode de positionnement invention sera d'abord exposé ci-après, indépendamment de son implémentation matérielle.

Le code du satellite $SV_k \in S$ se répétant avec une période de répétition $T$ (1 ms dans le cas d'un signal GPS), la phase du code, $\tau_k$, dans le signal reçu correspond, en équivalent temps, à l'instant d'émission du signal reçu par l'objet, soit :

$$\tau_k = \big[\delta_k + t_R - \rho_k/c\big] \bmod T \qquad (1)$$

où $\delta_k$ est l'offset temporel de l'horloge du satellite $SV_k$ par rapport au temps du système GPS, et $\hat{t}_R$ est le temps local de l'objet (temps GPS affecté de l'erreur d'horloge de l'objet) correspondant à la réception du premier échantillon du paquet, $\rho_k$ est la pseudodistance de l'objet connecté au satellite . En effet, la pseudodistance $\rho_k$ est conventionnellement définie par :

$$\rho_k = c\big(t_R - t_k\big) \qquad (2)$$

où $t_k$ est le temps d'émission, mesuré par rapport au temps du système GPS, et $\tau_k = t_k + \delta_k$.

Après avoir reçu les phases de code (premier mode de réalisation) ou les avoir estimées lui-même (second mode de réalisation), le serveur de calcul choisit un satellite de référence dans l'ensemble S, soit conventionnellement $SV_0$, et détermine les différences de phase de code entre chacun des autres satellites et $SV_0$, autrement dit, étant donné que les codes des différents satellites sont reçus au même instant $\hat{t}_R$ :

$$\tau_k - \tau_0 = \left[ (\delta_k - \delta_0) - (\rho_k - \rho_0)/c \right] \bmod T \qquad (3)$$

Moyennant la correction des offsets d'horloge $\delta_k, \delta_0$ à partir des données d'éphémérides, le serveur peut calculer simplement la différence des phases de code des satellites $SV_k$ et $SV_0$ :

$$\tau_k - \tau_0 = \left[ -(\rho_k - \rho_0)/c \right] \bmod T \qquad (4)$$

Il est important de noter que la différence de phases de codes ou, de manière équivalente, la différence de pseudodistances entre satellites permet de s'affranchir du temps de réception du signal GNSS par l'objet connecté (et donc en particulier de l'erreur d'horloge de l'objet).

Le serveur de calcul effectue ensuite un maillage de la zone d'intérêt par un réseau de points, $R$, cette zone d'intérêt dépendant de la connaissance *a priori* dont dispose le serveur quant à la position de l'objet. La zone d'intérêt peut être tridimensionnelle, bidimensionnelle voire monodimensionnelle. Par exemple, la zone d'intérêt pourra être définie par un volume compris entre deux altitudes prédéterminées tout autour du globe terrestre, une zone à la surface du globe terrestre comprise entre deux latitudes et deux longitudes, ou encore une section d'une voie terrestre.

Le maillage de la zone est choisi suffisamment dense pour que tout point de la zone d'intérêt se trouve à une distance inférieure, voire sensiblement inférieure, à $cT/2$ d'un point appartenant au réseau $R$. Pour une zone bidimensionnelle, on pourra notamment choisir une maille carrée avec un côté de longueur inférieure, voire sensiblement inférieure à $cT$.

Afin d'obtenir un maillage plus dense de la zone d'intérêt, le serveur pourra acquérir des satellites de systèmes GNSS différents (GPS, Galileo, etc.) ayant des périodicités de codes différentes.

Le serveur détermine ensuite les points du réseau de points $R$ voyant au moins les satellites de l'ensemble $S$ au temps $\hat{t}_R$, estimation de l'instant de réception $\hat{t}_R$. L'estimation $\hat{t}_R$ est fournie par le jeton d'horodatage du paquet d'échantillons, que l'horodatage soit effectué par la passerelle 160, $\hat{t}_R^{GTW}$, ou par le serveur 180 lui-même, $\hat{t}_R^{S}$. Cette estimation est approximative au sens où elle ne tient pas compte du temps de transmission de l'objet connecté à la passerelle, augmenté dans le cas de $\hat{t}_R^{S}$, du temps d'acheminement au serveur à travers le réseau. En outre, cette estimation ne tient pas non plus compte de l'offset de l'horloge d'horodatage (quelques ms voire quelques dizaines de ms) par rapport à l'horloge du système GPS. Toutefois, compte tenu de la vitesse de défilement angulaire des satellites (de l'ordre d'un centième de degré par seconde), la précision de cette estimation est très largement suffisante pour supposer que la configuration satellitaire est identique.

Compte tenu de $\hat{t}_R$ ainsi que des données d'almanach ou préférentiellement d'éphémérides reçues par le réseau, le serveur peut estimer les positions des différents satellites. Il pourra ne retenir par exemple que ceux présentant une élévation supérieure à une valeur de seuil prédéterminée, par exemple 5°, pour chaque point candidat du réseau de points $R$.

Les points de $R$ voyant tous les satellites de l'ensemble $S$ au temps $\hat{t}_R$ constituent un ensemble $C = \{P_i \in R, i = 0, ..., N\text{-}1\}$ de points candidats pour la position de l'objet connecté.

Le serveur estime ensuite à partir de $\hat{t}_R$, les instants possibles de transmission de codes par les différents satellites de $S$. Ces instants sont sélectionnés dans une plage $[\hat{t}_E - \Delta t_E, \hat{t}_E + \Delta t_E]$ avec $\hat{t}_E = \hat{t}_R - \theta$ où $\theta$ est un temps de propagation moyen des signaux émis par les satellites de $S$ et les points candidats. La marge d'erreur, $\Delta t_E$, tient notamment compte de l'incertitude sur l'estimation de l'instant de réception $\hat{t}_R$ et d'autres erreurs aléatoires (erreur sur le temps de propagation entre l'objet connecté et le serveur ou sur les paramètres du modèle troposphérique par exemple).

Les instants possibles de transmission de codes sont notés dans la suite $t_E^j = t_R^j - \theta$, $j = 0, ..., M\text{-}1$.

Le serveur évalue ensuite une métrique d'erreur en chaque point de l'ensemble $C$.

Plus précisément, il calcule pour chaque point candidat $P_i$, $i = 0, .., N\text{-}1$, de $C$, et pour chaque instant de transmission possible $t_E^j$, $j = 0, ..., M - 1$ les $K\text{-}1$ différences de pseudodistances modulo $T$, c'est à dire $\left( \rho_{k,i}^j - \rho_{0,i}^j \right) \bmod T$, où $\rho_{k,i}^j$ désigne la pseudodistance calculée entre la position du satellite $SV_k$ au temps $t_E^j$ et le point candidat $P_i$.

Le serveur sélectionne ensuite le point candidat et l'instant de transmission possible au moyen de :

$$i_{ML}, j_{ML} = \arg\min_{i,j} \left( \sum_{k=1}^{K-1} \left| \left[ \left( \rho_{k,i}^j - \rho_{0,i}^j \right) / c \right] \mathrm{mod}.T + \left[ \tau_k - \tau_0 \right] \mathrm{mod}.T \right|^2 \right) \qquad (5)$$

On en déduit par conséquent le temps d'émission $t_E^{j_{ML}}$ et la position $P_{iML}$ les plus vraisemblables. De manière générale, l'argument à minimiser de l'expression (5) pourra être du type

$$F\left( \sum_{k=1}^{K-1} \left| \left[ \left( \rho_{k,i}^j - \rho_{0,i}^j \right) / c \right] \mathrm{mod}.T + \left[ \tau_k - \tau_0 \right] \mathrm{mod}.T \right|^2 \right)$$ où F est une fonction croissante.

Alternativement, le serveur pourra sélectionner le point candidat et l'instant de transmission possible au moyen d'une métrique de vraisemblance :

$$i_{ML}, j_{ML} = \arg\max_{i,j} \left( \sum_{k=1}^{K-1} \left| \left[ \left( \rho_{k,i}^j - \rho_{0,i}^j \right) / c \right] \mathrm{mod}.T + \left[ \tau_k - \tau_0 \right] \mathrm{mod}.T \right|^2 \right)^{-1} \qquad (6)$$

Comme précédemment, on obtient le temps d'émission $t_E^{j_{ML}}$ et la position $P_{iML}$ les plus vraisemblables. De manière générale, l'argument à maximiser de l'expression (6) pourra être

$$G\left( \sum_{k=1}^{K-1} \left| \left[ \left( \rho_{k,i}^j - \rho_{0,i}^j \right) / c \right] \mathrm{mod}.T + \left[ \tau_k - \tau_0 \right] \mathrm{mod}.T \right|^2 \right)$$ où G est une fonction décroissante. Cette variante sera préférée pour permettre de faire ressortir plus facilement du bruit le pic correspondant au maximum de vraisemblance.
De manière plus générale, le serveur cherchera à optimiser une fonction d'objectif pour sélectionner parmi les temps d'émission possibles et les points candidats, ceux qui correspondent au maximum de vraisemblance. D'autres fonctions d'objectif que celles par les expressions (5) et (6) pourront être envisagées par l'homme du métier sans sortir du cadre de la présente invention.

Selon une variante, on pondère les écarts $\left| \frac{1}{c} \left( \rho_{k,i}^j - \rho_{0,i}^j \right) \mathrm{mod}.T + \left( \tau_k - \tau_0 \right) \mathrm{mod}.T \right|^2$ par le rapport signal sur bruit (en sortie du corrélateur glissant) affectant la mesure du code de phase $\tau_k$. Ainsi, les mesures les moins bruitées apportent une plus forte contribution à la fonction d'objectif. On pourra ainsi par exemple opter pour :

$$i_{ML}, j_{ML} = \arg\min_{i,j} \left( \sum_{k=1}^{K-1} \lambda_k \log \left| \left[ \left( \rho_{k,i}^j - \rho_{0,i}^j \right) / c \right] \mathrm{mod}.T + \left[ \tau_k - \tau_0 \right] \mathrm{mod}.T \right| \right)$$

$$(7)$$

où $\lambda_k$ est le rapport signal sur bruit affectant la mesure de la phase de code $\tau_k$.
On notera que les arguments des fonctions d'objectif dans les expressions (5)-(7) sont des arguments temporels, à savoir des équivalents temporels de différences de pseudodistances. De manière équivalente, il est clair que ces arguments peuvent, par simple multiplication par c, porter sur les différences de pseudodistances elles-mêmes.

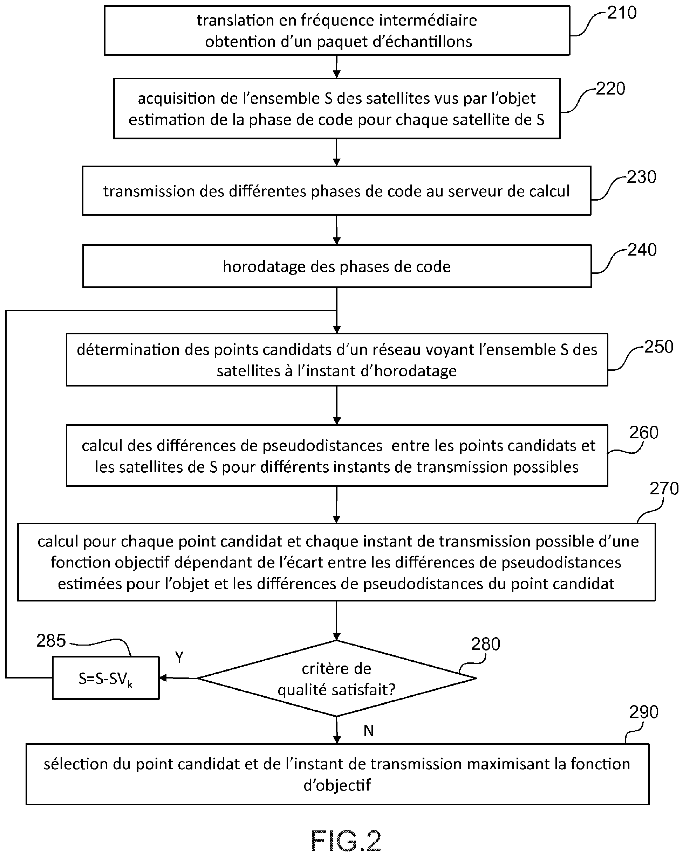

La Fig. 2 représente schématiquement l'organigramme d'une méthode de positionnement CO-GNSS d'un objet connecté selon le premier mode de réalisation de l'invention.
A l'étape 210, le signal GNSS reçu par le lobe principal de la première antenne est translaté à une fréquence intermédiaire avant d'être échantillonné au moins à la fréquence de Nyquist. L'objet connecté obtient ainsi une séquence d'échantillons bruts (*raw data*).
A l'étape 220, l'objet connecté réalise ensuite l'acquisition des différents satellites et estime la phase de code pour chacun d'entre eux. L'acquisition peut être réalisée au moyen d'une corrélation glissante, transposée dans le domaine fréquentiel, comme indiqué plus haut.
Les phases de code ainsi obtenues pour les différents satellites de S sont ensuite transmises au serveur de calcul en 230 et sont horodatées en 240 par un nœud sur le chemin de routage entre la passerelle et le serveur. Par horodatage, on entend ici tout procédé permettant d'adjoindre une date de réception aux phases de code. L'horloge d'horodatage est synchronisée au moyen du réseau, par exemple au moyen du protocole NTP.

A l'étape 250, le serveur utilise un maillage de la zone d'intérêt par un réseau de points, *R*. La maille de *R* présente une taille *a* sensiblement inférieure à *cT* où *T* est la période de répétition du code CDMA/ la durée de la séquence d'étalement. Il détermine ensuite les points de *R* au sein de la zone d'intérêt qui voient au moins les satellites de l'ensemble *S* à l'instant $\hat{t}_R$ fourni par l'horodatage. On forme ainsi un sous-ensemble $C \subset R$ de points candidats. Les positions des satellites à l'instant $\hat{t}_R$ sont estimées à partir des données d'almanachs ou, préférentiellement d'éphémérides, obtenues via le réseau.

A l'étape 260, le serveur calcule en chaque point candidat $P_i$, $i = 0,..,N-1$, de *C* et pour chaque instant de transmission possible $t_E^j$, $j = 0,...,M-1$, les K-1 des différences de pseudodistances modulo *cT*, soit $\left( \rho_{k,i}^j - \rho_{0,i}^j \right) \mathrm{mod}.cT$, $k = 1,..,K-1$, les instants de transmission possibles étant choisis dans un intervalle [$\hat{t}_E$ $-\Delta t_E, \hat{t}_E + \Delta t_E$] avec $\hat{t}_E = \hat{t}_R - \theta$ où $\theta$ est un temps moyen de propagation entre les satellites de *S* et les points de *C*.

A l'étape 270, le serveur calcule pour chaque point candidat et chaque instant de transmission possible, un écart entre, d'une part, les différences des pseudodistances associées aux phases de code estimées à l'étape 220, soit [$c(\tau_k - \tau_0)$]mod.*cT*, $k = 1,..,K-1$ et, d'autre part, les différences de pseudodistances en équivalent temps calculées à l'étape 260, cet écart étant sommé sur l'ensemble S des satellites autres que le satellite de référence. Par exemple cette fonction d'objectif pourra être une métrique de vraisemblance à maximiser ou une métrique d'erreur à minimiser. Bien entendu, cet écart pour être calculé de manière indifférente en temps ou en distance, comme indiqué plus haut.

Il convient de noter que lorsque la méthode de positionnement est multi-constellation, les écarts de différences de pseudodistances sont sommés sur tous les ensembles de satellites, $S_1, S_2,..$ correspondant aux différentes constellations. La méthode peut prendre en compte des constellations ayant des périodes de répétition différentes dans la mesure où les écarts sont calculés satellite par satellite.

A partir de l'écart ainsi déterminé pour chaque point candidat, le serveur en déduit la valeur prise par la fonction objectif en chacun des points considérés.

A l'étape 280, le serveur teste si un critère de qualité est satisfait.

Le critère de qualité sera considéré comme satisfait si le maximum de la fonction d'objectif (alternativement le minimum de la fonction de coût) sur l'ensemble des points candidats est supérieur (resp. inférieur) à une valeur de seuil prédéterminée.

Par exemple, si l'on utilise la fonction d'objectif définie par (6), le critère de qualité sera considéré comme rempli si :

$$\max_{i,j} \left( \sum_{k=1}^{K-1} \left| \left[ \left( \rho_{k,i}^j - \rho_{0,i}^j \right)/c \right] \mathrm{mod}.T + \left[ \tau_k - \tau_0 \right] \mathrm{mod}.T \right|^2 \right)^{-1} > \frac{2\mu}{(K-1)a^2} \qquad (8)$$

où $\mu$ est un coefficient de réglage (généralement proche de 1) d'autant plus grand que l'on souhaite un haut niveau de qualité. On comprendra par exemple que si $\mu = 1$, le critère de qualité signifie que les écarts entre les différences de pseudodistances estimées et celles calculées soient inférieurs en moyenne à la demi-longueur ( $a/\sqrt{2}$ ) de la diagonale de la maille sur l'ensemble *S* des satellites considérés.

Lorsque le critère de qualité est satisfait, on poursuit en 290. A l'inverse, on décrémente de 1 la valeur de *K* et l'on exclut arbitrairement un satellite $SV_k$ de l'ensemble *S*. On retourne ensuite en 250 à une nouvelle détermination des points candidats sur la base de l'ensemble réduit $S\backslash\{SV_k\}$. On élimine tour à tour chacun des satellites de l'ensemble *S*, ce qui revient à tester successivement les sous-ensembles de cardinal *K* - 1 de cet ensemble. Si aucun de ces sous-ensembles ne permet de satisfaire au critère de qualité précité, on poursuit la recherche en éliminant tour à tour de l'ensemble *S* des couples de satellites $S\backslash\{SV_k, SV_k\}$, puis en cas d'échec à des triplets de satellites etc. Ce processus se poursuit tant que le critère de qualité n'est pas satisfait et pour autant que l'on conserve un nombre minimal prédéterminé de satellites (en pratique 5).

Il convient de noter que l'étape 280, bien que préférable, reste optionnelle.

A l'étape 290, le serveur sélectionne le couple de point candidat et d'instant de transmission correspondant à l'optimum de la fonction d'objectif, c'est-à-dire au moindre écart de pseudodistances (ou son équivalent temporel).

Le point candidat sélectionné donne une estimation grossière de la position de l'objet connecté.

Le cas échéant, cette estimation grossière pourra être utilisée ensuite comme valeur initiale par un algorithme de positionnement à chaud, pour fournir une estimation plus précise.

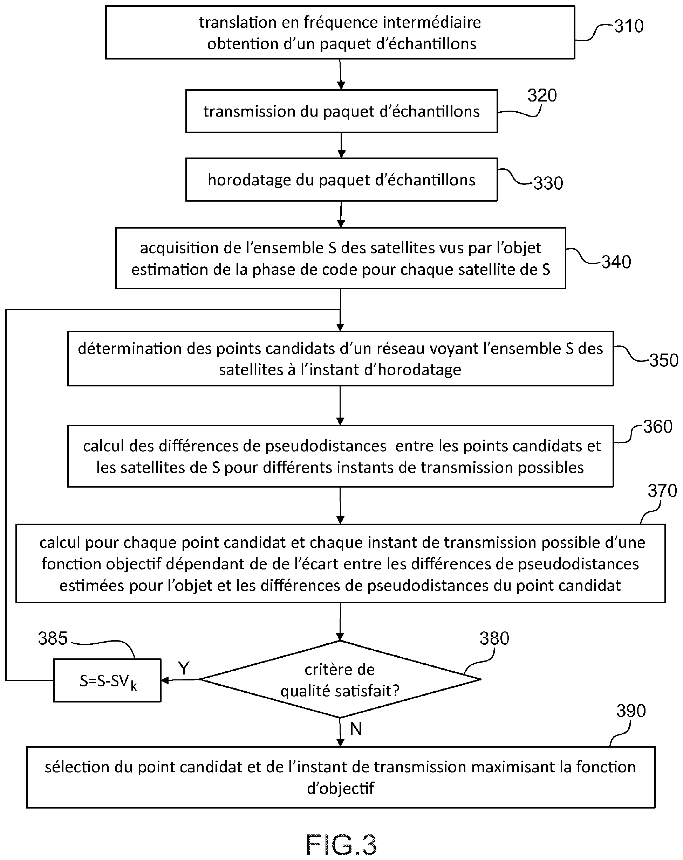

La Fig. 3 représente schématiquement l'organigramme d'une méthode de positionnement CO-GNSS d'un objet connecté selon le second mode de réalisation de l'invention.

La première étape 310 est similaire à l'étape 210 de la Fig. 2 au sens où le signal GNSS reçu par l'objet connecté est translaté à une fréquence intermédiaire puis échantillonné. L'objet connecté forme des paquets d'échantillons de taille prédéterminée et les transmet à l'étape 320 via son module d'émission IoT au serveur de calcul.

Dans la suite de l'algorithme, on considère le traitement d'un tel paquet d'échantillons.

A l'étape 330, le paquet d'échantillons est horodaté soit par un nœud sur le chemin de routage entre la passerelle et le serveur de calcul (par exemple par la passerelle ou bien par le serveur lui-même). Par horodatage, on entend ici tout procédé permettant d'adjoindre une date de réception au paquet. L'horloge d'horodatage est synchronisée au moyen du réseau, par exemple au moyen du protocole NTP.

Les étapes suivantes sont toutes effectuées par le serveur de calcul.

A l'étape 340, le serveur effectue l'acquisition de l'ensemble S des satellites vus par l'objet. Il estime, à partir de la séquence d'échantillons contenue dans le paquet, les phases de code relatives aux différents satellites. Il calcule ensuite les différences de phase de code entre les différents satellites et un satellite de référence, comme expliqué précédemment.

Le cas échéant, l'acquisition des satellites et l'estimation des phases de code pourront être effectuées pour différents systèmes satellitaires (GPS, Galileo, etc.), le traitement en 340 étant alors effectué pour ces différents systèmes.

Les étapes suivantes 350-390 sont respectivement identiques aux étapes 250-290 et leur description ne sera donc pas reprise ici.

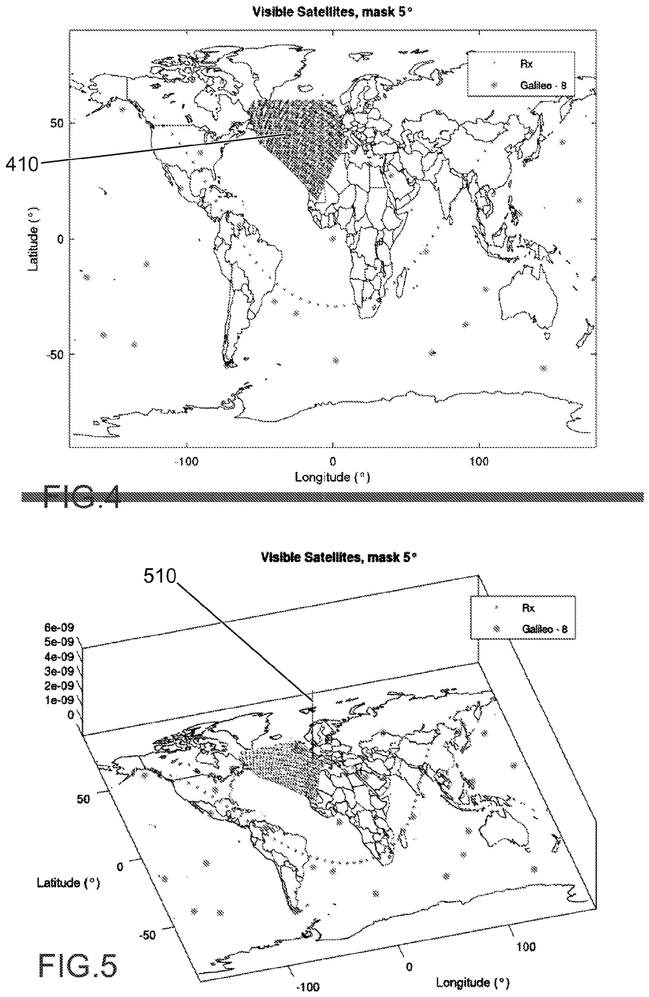

La Fig. 4 illustre sur un exemple le résultat de l'étape de détermination des points candidats à l'étape 250 ou 350.

La zone d'intérêt était ici la totalité de la surface du globe terrestre comprise entre les latitudes de -60° à +60°, le réseau de points *R* résultant d'un maillage régulier en latitude et en longitude de cette surface. L'ensemble *S* des satellites vus de l'objet connecté était constitué de 8 satellites du système Galileo.

L'ensemble *C* des points candidats est désigné par 410. Il est constitué par l'ensemble des points de *R* voyant les satellites de *S*, les satellites présentant un angle d'élévation sur l'horizon de moins de 5° étant exclus.

La Fig. 5 montre sur l'exemple de la Fig. 4 le résultat de la sélection du point candidat optimal à l'étape 290 ou 390. La fonction d'objectif était une métrique de vraisemblance telle que donnée par l'expression (6). On constate que cette métrique présente un pic très marqué, 510, correspondant à la position de l'objet connecté.

## Revendications

1. Méthode de positionnement d'un objet connecté, l'objet recevant des signaux GNSS d'une pluralité de satellites appartenant à au moins un système satellitaire et les translatant en fréquence intermédiaire avant de les échantillonner (210), dans laquelle :

   (a) l'objet effectue à partir d'une séquence des échantillons ainsi obtenus une acquisition d'un ensemble S de satellites vus de l'objet connecté, puis estime des phases de code des signaux GNSS (220), les phases de code étant ensuite transmises (230) à un serveur de calcul via un réseau de communication:
   (b) les phases de code sont horodatées (240) au moyen d'une horloge d'horodatage par un nœud du réseau, ladite méthode étant **caractérisée en ce que**:
   (c) le serveur de calcul détermine (250) parmi les points d'un réseau maillé dans une zone d'intérêt un ensemble de points candidats voyant les satellites de l'ensemble S à l'instant d'horodatage ;
   (d) le serveur calcule (260) les pseudodistances séparant les points candidats et les satellites de S pour une pluralité d'instants de transmission possibles et en déduit des différences de pseudodistances par rapport à un satellite de référence de l'ensemble S;
   (e) le serveur estime (270) des pseudodistances séparant l'objet connecté et les satellites de S à partir des phases de code reçues, estimées à l'étape (a), et en déduit des différences de pseudodistances estimées par rapport au satellite de référence, puis calcule une fonction d'objectif dépendant de l'écart entre les différences de pseudodistances ainsi estimées et les pseudodistances calculées à l'étape (d), l'écart étant sommé sur l'ensemble des satellites de l'ensemble *S* hormis le satellite de référence, le calcul étant réalisé pour chaque point candidat ;
   (f) le point candidat optimisant la fonction d'objectif fournit une estimation de la position de l'objet connecté.

2. Méthode de positionnement d'un objet connecté selon la revendication 1, **caractérisée en ce que** les phases de code sont horodatée à l'étape (b) par une passerelle reliée au point d'accès du réseau recevant lesdites phases de code ou bien par le serveur de calcul.

3. Méthode de positionnement d'un objet connecté, l'objet recevant des signaux GNSS d'une pluralité de satellites appartenant à au moins un système satellitaire et les translatant en fréquence intermédiaire avant de les échantillonner (310), au moins un paquet d'échantillons ainsi obtenus étant transmis (320) à un serveur de calcul via un réseau de communication, ladite méthode étant **caractérisée en ce que** :

(a) le paquet d'échantillons est horodaté (330) au moyen d'une horloge d'horodatage par un nœud du réseau ;

(b) le serveur de calcul effectue (340), à partir dudit paquet, une acquisition d'un ensemble *S* de satellites vus de l'objet connecté, puis estime des phases de code des signaux GNSS et en déduit les différences de pseudodistances séparant l'objet connecté et lesdits satellites, les différences étant estimées par rapport à un satellite de référence de l'ensemble *S*;

(c) le serveur de calcul détermine (350) parmi les points d'un réseau maillé dans une zone d'intérêt un ensemble de points candidats voyant les satellites de l'ensemble *S* à l'instant d'horodatage ;

(d) le serveur calcule les pseudodistances séparant les points candidats et les satellites de *S* pour une pluralité d'instants de transmission possibles et en déduit des différences de pseudodistances par rapport au dit satellite de référence ;

(e) le serveur calcule une fonction d'objectif dépendant de l'écart entre les différences de pseudodistances estimées à l'étape (b) et les différences de pseudodistances calculées à l'étape (d), l'écart étant sommé sur l'ensemble des satellites de l'ensemble *S* hormis le satellite de référence, le calcul étant réalisé pour chaque point candidat ;

(f) le point candidat optimisant la fonction d'objectif fournit une estimation de la position de l'objet connecté.

4. Méthode de positionnement d'un objet connecté selon la revendication 3, **caractérisé en ce que** le paquet d'échantillons est horodaté à l'étape (a) par une passerelle reliée au point d'accès du réseau recevant ledit paquet ou bien par le serveur de calcul.

5. Méthode de positionnement d'un objet connecté selon l'une des revendications précédentes, **caractérisée en ce que** l'horloge d'horodatage est synchronisée par le protocole NTP.

6. Méthode de positionnement d'un objet connecté selon l'une des revendications précédentes, **caractérisée en ce que** les différences entre pseudodistances calculées à l'étape (d) sont calculées modulo *cT* où *c* est la vitesse de la lumière et *T* la période de répétition d'un code d'étalement dans les signaux GNSS.

7. Méthode de positionnement d'un objet connecté selon la revendication 6, **caractérisée en ce qu'**à l'étape (c), les dimensions de la maille du réseau sont choisies strictement inférieures à *cT.*

8. Méthode de positionnement d'un objet connecté selon l'une des revendications précédentes, **caractérisée en ce qu'**à l'étape (c), le serveur détermine les positions des satellites de l'ensemble *S* à l'instant d'horodatage à partir d'informations d'almanach ou d'éphémérides reçues par le réseau, et en déduit les points candidats de la zone d'intérêt voyant les satellites dudit ensemble.

9. Méthode de positionnement d'un objet connecté selon les revendications précédentes, **caractérisée en ce que** les instants de transmission possibles sont des instants de transmission de codes par les satellites de *S* au sein d'un intervalle $[\hat{t}_E - \Delta t_E, \hat{t}_E + \Delta t_E]$ avec $\hat{t}_E = \hat{t}_R - \theta$ où $\hat{t}_R$ est l'instant d'horodatage, $\theta$ est un temps moyen de propagation entre les satellites de *S* et les points candidats, et $\Delta t_E$ est une marge d'erreur prédéterminée.

10. Méthode de positionnement d'un objet connecté selon la revendication 9, **caractérisée en ce que** la marge d'erreur est choisie supérieure à l'offset maximal de l'horloge d'horodatage par rapport à l'horloge du système satellitaire.

11. Méthode de positionnement d'un objet connecté selon les revendications précédentes, **caractérisée en ce qu'**après l'étape (e), le serveur détermine si un critère de qualité est satisfait en comparant une valeur extrémale de la fonction d'objectif avec une valeur de seuil prédéterminée (280, 380) et que lorsque le critère de qualité n'est pas satisfait, une nouvelle séquence d'étapes (c), (d), (e) est effectuée en éliminant un satellite de l'ensemble *S*.

12. Méthode de positionnement d'un objet connecté selon les revendications précédentes, **caractérisée en ce que** la fonction d'objectif est une métrique de vraisemblance et que le point candidat optimal est défini par l'indice $i_{ML}$ du point candidat parmi l'ensemble des points candidats $P_i$, $i = 0,.., N$ -1, donné par :

$$i_{ML}, j_{ML} = \arg\max_{i,j} \left( \sum_{k=1}^{K-1} \frac{1}{c} \left| \left( \rho_{k,i}^j - \rho_{0,i}^j \right) \bmod T + \left( \tau_k - \tau_0 \right) \bmod T \right|^2 \right)^{-1}$$

où ( $\rho_{k,i}^{j} - \rho_{0,i}^{j}$ ) est la différence des pseudodistances séparant, à l'instant de transmission possible $t_{E}^{j}$, le point candidat $P_i$ et le satellite $s_k$ de l'ensemble $S$, $T$ est la période de répétition d'un code d'étalement dans les signaux GNSS, ($\tau_k$ -$\tau_0$) est la différence de phases du code du satellite $s_k$ et du satellite $s_0$ de référence, c est la vitesse de la lumière et $K$ est le nombre de satellites de l'ensemble $S$.

**Patentansprüche**

1.  Verfahren zur Positionierung eines verbundenen Objekts, wobei das Objekt GNSS-Signale von einer Vielzahl von Satelliten empfängt, die zu mindestens einem Satellitensystem gehören, und diese vor der Abtastung (210) in eine Zwischenfrequenz übersetzt, wobei:

    (a) das Objekt aus einer Sequenz der so erhaltenen Abtastungen eine Erfassung eines Satzes S von Satelliten durchführt, die von dem verbundenen Objekt gesehen werden, und dann Codephasen der GNSS-Signale (220) schätzt, wobei die Codephasen anschließend über ein Kommunikationsnetzwerk an einen Berechnungsserver übertragen werden (230):
    (b) die Codephasen mittels einer Zeitstempeluhr durch einen Netzknoten mit Zeitstempel (240) versehen sind, wobei das Verfahren **dadurch gekennzeichnet ist, dass**:
    (c) der Berechnungsserver aus den Punkten eines Netzwerkes in einem ROI einen Satz von Kandidatenpunkten bestimmt (250), die die Satelliten des Satzes S zu dem Zeitpunkt des Zeitstempels sehen;
    (d) der Server die Pseudodistanzen zwischen den Kandidatenpunkten und den Satelliten von S für eine Vielzahl möglicher Übertragungszeitpunkte berechnet (260) und daraus die Differenzen der Pseudodistanzen zu einem Referenzsatelliten des Satzes S ableitet;
    (e) der Server die Pseudodistanzen (270) schätzt, die das verbundene Objekt und die Satelliten von S aus den empfangenen Codephasen trennen, die in Schritt (a) geschätzt werden, und daraus die Differenzen der geschätzten Pseudodistanzen in Bezug auf den Referenzsatelliten ableitet, und dann eine Zielfunktion berechnet, die von der Abweichung zwischen den so geschätzten Differenzen der Pseudodistanzen und den in Schritt (d) berechneten Pseudodistanzen abhängig ist, wobei die Abweichung über den gesamten Satz der Satelliten des Satzes S mit Ausnahme des Referenzsatelliten addiert wird, wobei die Berechnung für jeden Kandidatenpunkt durchgeführt wird;
    (f) der Kandidatenpunkt, der die Zielfunktion optimiert, eine Schätzung der Position des verbundenen Objekts bereitstellt.

2.  Verfahren zur Positionierung eines verbundenen Objekts nach Anspruch 1, **dadurch gekennzeichnet, dass** die Codephasen in Schritt (b) durch ein Gateway, das mit dem Zugangspunkt des Netzwerks verbunden ist, das die Codephasen empfängt, oder durch den Berechnungsserver mit einem Zeitstempel versehen werden.

3.  Verfahren zur Positionierung eines verbundenen Objekts, wobei das Objekt GNSS-Signale von einer Vielzahl von Satelliten empfängt, die zu mindestens einem Satellitensystem gehören, und diese in eine Zwischenfrequenz überträgt, bevor sie abgetastet werden (310), wobei mindestens ein so erhaltenes Abtastpaket (320) über ein Kommunikationsnetzwerk an einen Berechnungsserver übertragen wird, wobei das Verfahren **dadurch gekennzeichnet ist, dass**:

    (a) das Abtastpaket mittels einer Zeitstempeluhr durch einen Netzwerkknoten mit einem Zeitstempel (330) versehen wird;
    (b) der Berechnungsserver (340) ausgehend von dem Paket eine Erfassung eines Satzes S von Satelliten durchführt, die von dem verbundenen Objekt gesehen werden, dann Codephasen der GNSS-Signale schätzt und daraus die Differenzen der Pseudodistanzen ableitet, die das verbundene Objekt und die Satelliten trennen, wobei die Differenzen in Bezug auf einen Referenzsatelliten des Satzes S geschätzt werden;
    (c) der Berechnungsserver aus den Punkten eines Netzes in einem Bereich von Interesse einen Satz von Kandidatenpunkten bestimmt (350), die die Satelliten des Satzes S zu dem Zeitpunkt des Zeitstempels sehen;
    (d) der Server die Pseudodistanzen zwischen den Kandidatenpunkten und den Satelliten von $S$ für eine Vielzahl möglicher Übertragungszeitpunkte berechnet und daraus die Differenzen der Pseudodistanzen zu dem Referenzsatelliten ableitet;
    (e) der Server eine Zielfunktion berechnet, die von der Abweichung zwischen den in Schritt (b) geschätzten Pseudodistanzdifferenzen und den in Schritt (d) berechneten Pseudodistanzdifferenzen abhängig ist, wobei die Abweichung über alle Satelliten des Satzes S mit Ausnahme des Referenzsatelliten summiert wird, wobei die Berechnung für jeden Kandidatenpunkt durchgeführt wird;

(f) der Kandidatenpunkt, der die Zielfunktion optimiert, eine Schätzung der Position des verbundenen Objekts bereitstellt.

4. Verfahren zur Positionierung eines verbundenen Objekts nach Anspruch 3, **dadurch gekennzeichnet, dass** das Abtastpaket in Schritt (a) durch ein Gateway, das mit dem Zugangspunkt des Netzwerks verbunden ist, das das Paket empfängt, oder durch den Berechnungsserver mit einem Zeitstempel versehen wird.

5. Verfahren zur Positionierung eines verbundenen Objekts nach einem der vorhergehenden Ansprüche, **dadurch gekennzeichnet, dass** die Zeitstempeluhr durch das NTP-Protokoll synchronisiert wird.

6. Verfahren zur Positionierung eines verbundenen Objekts nach einem der vorhergehenden Ansprüche, **dadurch gekennzeichnet, dass** die Unterschiede zwischen den in Schritt (d) berechneten Pseudoabständen modulo $cT$ berechnet werden, wobei $c$ die Lichtgeschwindigkeit und $T$ die Wiederholungsperiode eines Streucodes in den GNSS-Signalen ist.

7. Verfahren zur Positionierung eines verbundenen Objekts nach Anspruch 6, **dadurch gekennzeichnet, dass** in Schritt (c) die Abmessungen des Netzes des Netzwerkes strikt kleiner als $cT$ gewählt sind.

8. Verfahren zur Positionierung eines verbundenen Objekts nach einem der vorhergehenden Ansprüche, **dadurch gekennzeichnet, dass** der Server in Schritt (c) die Positionen der Satelliten des Satzes $S$ zu dem Zeitpunkt des Zeitstempels aus von dem Netzwerk empfangenen Almanach- oder Ephemerideninformationen bestimmt und daraus die Kandidatenpunkte des Bereichs von Interesse ableitet, der die Satelliten des Satzes sieht.

9. Verfahren zur Positionierung eines verbundenen Objekts nach den vorhergehenden Ansprüchen, **dadurch gekennzeichnet, dass** die möglichen Übertragungszeitpunkte Codeübertragungszeitpunkte der Satelliten von $S$ innerhalb eines Intervalls $[\hat{t}_E - \Delta t_E, \hat{t}_E + \Delta t_E]$ mit $\hat{t}_E = \hat{t}_R - \theta$ ist, wobei ù $\hat{t}_R$ der Zeitstempelzeitpunkt ist, $\theta$ eine durchschnittliche Ausbreitungszeit zwischen den Satelliten von $S$ und den Kandidatenpunkten ist und $\Delta t_E$ eine vorbestimmte Fehlerspanne ist.

10. Verfahren zur Positionierung eines verbundenen Objekts nach Anspruch 9, **dadurch gekennzeichnet, dass** die Fehlerspanne größer als der maximale Versatz der Zeitstempeluhr in Bezug auf die Uhr des Satellitensystems gewählt ist.

11. Verfahren zur Positionierung eines verbundenen Objekts nach den vorhergehenden Ansprüchen, **dadurch gekennzeichnet, dass** der Server nach Schritt (e) bestimmt, ob ein Qualitätskriterium erfüllt ist, indem er einen Extremwert der Zielfunktion mit einem vorbestimmten Schwellenwert (280, 380) vergleicht, und dass, wenn das Qualitätskriterium nicht erfüllt ist, eine neue Abfolge von Schritten (c), (d), (e) durchgeführt wird, indem ein Satellit aus dem Satz S entfernt wird.

12. Verfahren zur Positionierung eines verbundenen Objekts nach den vorhergehenden Ansprüchen, **dadurch gekennzeichnet, dass** die Zielfunktion eine Plausibilitätsmetrik ist und der optimale Kandidatenpunkt durch den Index $i_{ML}$ des Kandidatenpunktes aus der Gesamtheit der Kandidatenpunkte $P_i$, $i = 0,..,N-1,$ bestimmt wird durch:

$$i_{ML}, j_{ML} = \arg\max_{i,j} \left( \sum_{k=1}^{K-1} \frac{1}{c} \left| \left( \rho_{k,i}^{j} - \rho_{0,i}^{j} \right) \mathrm{mod}.T + \left( \tau_k - \tau_0 \right) \mathrm{mod}.T \right|^2 \right)^{-1}$$

wobei ($P_{k,i}^{j} - P_{0,i}^{j}$) die Differenz der Pseudodistanzen ist, die zum Zeitpunkt der möglichen Übertragung $t_E^{j}$ den Kandidatenpunkt $P_i$ und den Satelliten $s_k$ des Satzes S trennen, $T$ die Wiederholungsperiode eines Streucodes in den GNSS-Signalen ist, ($\tau_k - \tau_0$) die Phasendifferenz des Codes des Satelliten $s_k$ und des Referenzsatelliten $s_0$ ist, $c$ die Lichtgeschwindigkeit ist und $K$ die Anzahl der Satelliten des Satzes $S$ ist.

**Claims**

1. A method for positioning a connected object, the object receiving GNSS signals from a plurality of satellites belonging to at least one satellite system and translating them in an intermediate frequency before sampling them (210), wherein:

   (a) the object performs, on the basis of a sequence of the samples thus obtained, an acquisition of a set $S$ of satellites seen from the connected object, then estimates code phases of the GNSS signals (220), the code phases being afterwards transmitted (230) to a computing server via a communication network;
   (b) the code phases are time-stamped (240) by means of a time-stamp clock by a node of the network, said method being **characterised in that**:
   (c) the computing server determines (250), from among the points of a mesh network in an area of interest, a set of candidate points seeing the satellites of the set S at the time-stamping time;
   (d) the server calculates (260) the pseudoranges separating the candidate points and the satellites of $S$ for a plurality of possible transmission times and deduces therefrom differences in pseudoranges with respect to a reference satellite of the set $S$ ;
   (e) the server estimates (270) pseudoranges separating the connected object and the satellites of $S$ from the received code phases, estimated in step (a), and deduces therefrom the differences in pseudoranges estimated with respect to the reference satellite, then calculates an objective function dependent on the discrepancy between the differences in pseudoranges thus estimated and the pseudoranges calculated in step (d), the discrepancy being summed over all of the satellites of the set $S$ except for the reference satellite, the calculation being carried out for each candidate point;
   (f) the candidate point optimising the objective function provides an estimate of the position of the connected object.

2. The method for positioning a connected object according to claim 1, **characterised in that** the code phases are time-stamped in step (b) by a gateway linked to the access point of the network receiving said code phases or by the computing server.

3. A method for positioning a connected object, the object receiving GNSS signals from a plurality of satellites belonging to at least one satellite system and translating them in an intermediate frequency before sampling them (310), at least one packet of samples thus obtained being transmitted (320) to a computing server via a communication network, said method being **characterised in that**:

   (a) the packet of samples is time-stamped (330) by means of a time-stamp clock by a node of the network;
   (b) the computing server performs (340), on the basis of said packet, an acquisition of a set $S$ of satellites seen from the connected object, then estimates code phases of the GNSS signals and deduces therefrom the differences in pseudoranges separating the connected object and said satellites, the differences being estimated with respect to a reference satellite of the set $S$ ;
   (c) the computing server determines (350), from among the points of a mesh network in an area of interest, a set of candidate points seeing the satellites of the set $S$ at the time-stamping time;
   (d) the server calculates the pseudoranges separating the candidate points and the satellites of $S$ for a plurality of possible transmission times and deduces therefrom differences in pseudoranges with respect to said reference satellite;
   (e) the server calculates an objective function dependent on the discrepancy between the differences in pseudoranges estimated in step (b) and the differences in pseudoranges calculated in step (d), the discrepancy being summed over all of the satellites of the set $S$ except for the reference satellite, the calculation being carried out for each candidate point;
   (f) the candidate point optimising the objective function provides an estimate of the position of the connected object.

4. The method for positioning a connected object according to claim 3, **characterised in that** the packet of samples is time-stamped in step (a) by a gateway linked to the access point of the network receiving said packet or by the computing server.

5. The method for positioning a connected object according to one of the preceding claims, **characterised in that** the time-stamp clock is synchronised by the NTP protocol.

6. The method for positioning a connected object according to one of the preceding claims, **characterised in that** the differences between pseudoranges calculated in step (d) are calculated modulo $cT$ where c is the speed of light and $T$ is the repetition period of a spread code in the GNSS signals.

7. The method for positioning a connected object according to claim 6, **characterised in that** in step (c), the dimensions of the mesh of the network are selected strictly smaller than $cT$.

8. The method for positioning a connected object according to one of the preceding claims, **characterised in that**, in step (c), the server determines the positions of the satellites of the set $S$ at the time-stamping time on the basis of Almanac information or of ephemerids received by the network, and deduces therefrom the candidate points of the area of interest seeing the satellites of said set.

9. The method for positioning a connected object according to the preceding claims, **characterised in that** the possible transmission times are times of transmission of codes by the satellites of $S$ within an interval $[\hat{t}_E - \Delta t_E, \hat{t}_E + \Delta t_E]$ with $\hat{t}_E = \hat{t}_R - \theta$ where $\hat{t}_R$ is the time-stamping time, $\theta$ is an average propagation time between the satellites of $S$ and the candidate points, and $\Delta t_E$ is a predetermined error margin.

10. The method for positioning a connected object according to claim 9, **characterised in that** the error margin is selected so as to be greater than the maximum offset of the time-stamp clock with respect to the clock of the satellite system.

11. The method for positioning a connected object according to the preceding claims, **characterised in that**, after step (e), the server determines whether a quality criterion is met by comparing an extreme value of the objective function with a predetermined threshold value (280, 380) and **in that** when the quality criterion is not met, a new sequence of steps (c), (d), (e) is performed by eliminating a satellite from the set $S$.

12. The method for positioning a connected object according to the preceding claims, **characterised in that** the objective function is a likelihood metric and **in that** the optimal candidate point is defined by the index $i_{ML}$ of the candidate point among the set of candidate points $P_i$, $i = 0,.., N$ -1, given by:

$$i_{ML}, j_{ML} = \arg\max_{i,j} \left( \sum_{k=1}^{K-1} \frac{1}{c} \left| \left( \rho_{k,i}^j - \rho_{0,i}^j \right) \bmod. T + \left( \tau_k - \tau_0 \right) \bmod. T \right|^2 \right)^{-1}$$

where ( $\rho_{k,i}^j - \rho_{0,i}^j$ ) is the difference in pseudoranges separating, at the possible transmission time $t_E^j$, the candidate point $P_i$ and the satellite $s_k$ of the set $S$, $T$ is the repetition period of a spread code in the GNSS signals, $(\tau_k - \tau_0)$ is the difference in phases of the code of the satellite $s_k$ and of the reference satellite $s_0$, c is the speed of light and $K$ is the number of satellites of the set $S$.

FIG.1A

FIG.1B

translation en fréquence intermédiaire
obtention d'un paquet d'échantillons ⟋210

↓

acquisition de l'ensemble S des satellites vus par l'objet
estimation de la phase de code pour chaque satellite de S ⟋220

↓

transmission des différentes phases de code au serveur de calcul ⟋230

↓

horodatage des phases de code ⟋240

↓

détermination des points candidats d'un réseau voyant l'ensemble S des
satellites à l'instant d'horodatage ⟋250

↓

calcul des différences de pseudodistances entre les points candidats et
les satellites de S pour différents instants de transmission possibles ⟋260

↓

calcul pour chaque point candidat et chaque instant de transmission possible d'une
fonction objectif dépendant de l'écart entre les différences de pseudodistances
estimées pour l'objet et les différences de pseudodistances du point candidat ⟋270

↓

285 —

| $S = S - SV_k$ | ←Y— | critère de qualité satisfait? | 280 |

↓N 290

sélection du point candidat et de l'instant de transmission maximisant la fonction
d'objectif

FIG.2

```
┌─────────────────────────────────────────────────┐
│   translation en fréquence intermédiaire         │⟋310
│   obtention d'un paquet d'échantillons           │
└─────────────────────────────────────────────────┘
                        │
                        ▼
        ┌─────────────────────────────────────┐
        │  transmission du paquet d'échantillons │  320
        └─────────────────────────────────────┘
                        │
                        ▼
        ┌─────────────────────────────────────┐
        │  horodatage du paquet d'échantillons  │  330
        └─────────────────────────────────────┘
                        │
                        ▼
   ┌───────────────────────────────────────────────┐
   │  acquisition de l'ensemble S des satellites vus par l'objet │  340
   │  estimation de la phase de code pour chaque satellite de S  │
   └───────────────────────────────────────────────┘
                        │
                        ▼
   ┌───────────────────────────────────────────────┐
   │  détermination des points candidats d'un réseau voyant l'ensemble S des │  350
   │  satellites à l'instant d'horodatage           │
   └───────────────────────────────────────────────┘
                        │
                        ▼
   ┌───────────────────────────────────────────────┐
   │  calcul des différences de pseudodistances entre les points candidats et │  360
   │  les satellites de S pour différents instants de transmission possibles  │
   └───────────────────────────────────────────────┘
                        │
                        ▼
   ┌───────────────────────────────────────────────┐
   │  calcul pour chaque point candidat et chaque instant de transmission possible d'une │  370
   │  fonction objectif dépendant de de l'écart entre les différences de pseudodistances │
   │  estimées pour l'objet et les différences de pseudodistances du point candidat      │
   └───────────────────────────────────────────────┘
                        │
                        ▼
    385              ◇ critère de ◇      380
  ┌────────┐   Y   ◇  qualité satisfait? ◇
  │ S=S-SVk │◄─────◇                     ◇
  └────────┘        ◇                   ◇
                        │ N
                        ▼
   ┌───────────────────────────────────────────────┐
   │  sélection du point candidat et de l'instant de transmission maximisant la fonction │  390
   │  d'objectif                                    │
   └───────────────────────────────────────────────┘
```

$S = S - SV_k$

FIG.3

**Visible Satellites, mask 5°**

FIG.4

**Visible Satellites, mask 5°**

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. LIU et al.** Energy efficient GPS sensing with Cloud offloading. *Proc. of 10th ACM Conference on Embedded Networked Sensor Systems (SenSys 2012)*, November 2012